# EUROPÄISCHE PATENTSCHRIFT

(11) **EP 0 849 666 B1**
(45) Veröffentlichungstag und Bekanntmachung des Hinweises auf die Patenterteilung: **18.07.2007**
(21) Anmeldenummer: 97122098.3
(22) Anmeldetag: 15.12.1997
(51) Int. Cl.: G06F 9/44, G06F 9/445

(54) **Verfahren zum Instantiieren einer versionsbehafteten Klasse**
Method for instantiating class versions
Procédé pour l'instantiation des versions de classes

(30) Priorität: 20.12.1996 DE 19653557
(43) Veröffentlichungstag der Anmeldung: 24.06.1998
(73) Patentinhaber: SIEMENS AKTIENGESELLSCHAFT, 80333 München (DE)
(72) Erfinder: Reich, Matthias, 81737 München (DE); Seidler, Steffen, 39576 Stendal (DE)

(56) Entgegenhaltungen:
- WO-A-97/14091
- "PROCESS FOR DYNAMIC UPGRADE OF AN OBJECT" IBM TECHNICAL DISCLOSURE BULLETIN, IBM CORP. NEW YORK, US, Bd. 38, Nr. 11, 1. November 1995 (1995-11-01), Seite 385, XP000547402 ISSN: 0018-8689

## Beschreibung

Die Erfindung betrifft ein Verfahren zum Instantiieren einer in einer objektorientierten Programmiersprache definierten versionsbehafteten Klasse.

Ein (Software-)Agentensystem besteht im wesentlichen aus zwei Komponenten, der Agentenplattform und dem Agenten selbst. Oftmals ist zusätzlich als dritte Komponente ein Monitoring- und Administrations-Tool vorhanden. Ein Agent (im Internet auch Robot, Wanderer oder Spider genannt) ist ein Programm, das mit den Rechten eines bestimmten Benutzers ausgestattet, eine von der konkreten zu erfüllenden Funktion abhängige Zeit unbeaufsichtigt existiert und sich während dieser Zeit mit anderen Agenten treffen und mit ihnen zusammenarbeiten kann. Damit ein Agent nicht nach Virenart Rechnersysteme lahmlegt, muß er sich "ausweisen" und darf nur eine endliche Lebensdauer besitzen.

Generell werden zwei Arten von Agenten unterschieden. Ein stationärer Agent wird vom Programmanfang bis zu seinem Ende nur von einem Rechner ausgeführt. Ein mobiler Agent dagegen wird zu verschiedenen Zeiten seines Lebenszyklus von verschiedenen Rechnern ausgeführt. Auf den Rechnern, die für den Agenten erreichbar sein sollen, muß eine Agentenplattform existieren. Diese Agentenplattform stellt dem Agent u.a. Dienste für Migration, (kontrollierten) Systemzugriff und Nachrichtenversand und Nachrichtenempfang zur Verfügung. Das Monitoring- und Administrations-Tool ermöglicht den manuellen Start von Agenten, den Überblick über von Agenten gesammelte Daten und die Anzeige anderer, das Agentensystem betreffende Informationen.

Ein System mobiler Agenten kann während seiner Laufzeit auf viele Rechner innerhalb eines Netzwerkes verteilt sein. Dazu ist sowohl auf jedem (Knoten-)Rechner in dem Netzwerk eine Plattform notwendig, als auch können sich Agenten, Datenstrukturen und Nachrichtenobjekte von Rechner zu Rechner bewegen. Werden nun im Laufe des Softwarelebenszyklus Fehler in einem dieser (Teil-)Programme festgestellt oder sollen aus anderen Gründen Teile der Software verändert werden (z.B. Verbesserung von Algorithmen, Anpassung an veränderte Umgebung, begrenzt auch Funktionsänderung), so kann u.U. ein Beenden und nach den entsprechenden Veränderungen ein anschließender Neustart des gesamten Systems nötig sein.

Aus dem IBM Technical Disclosure Bulletin, Vol. 38, No. 11, November 1995, ist ein Verfahren zur dynamischen Aktualisierung von einem ausführenden Objekt zu einer neuen Version, die abwärtskompatibel ist, bekannt.

Das der Erfindung zugrundeliegende Problem besteht darin, auch während der Laufzeit des Softwaresystems versionsbehaftet Änderungen an Systemteilen vornehmen zu können, wobei sich diese Änderungen nach und nach im gesamten System durchsetzen sollen.

Das Problem wird durch das Verfahren gemäß den Merkmalen des Patentanspruchs 1 gelöst.

Das erfindungsgemäße Verfahren ermöglicht es also, auch während der Laufzeit Änderungen an Systemteilen vorzunehmen, wobei sich diese Änderungen dann schrittweise im gesamten System ausbreiten. Eine Unterscheidung zwischen den veränderten Programmteilen wird möglich, indem eine Versionsverwaltung in das Konzept des dynamischen Updates integriert wird. So ist es beispielsweise möglich, bei verteilter Softwareentwicklung üblicherweise verwendete Versionsverwaltungssysteme und die somit vorhandenen Informationen über die verschiedenen Versionen zu integrieren.

Als Programmiersprache zur Implementierung des mobilen Agentensystems kann Java verwendet werden. Genauso ist es möglich, jede andere Programmiersprache zu verwenden, die ein dynamisches Laden von Klassen zur Verfügung stellt. Auch diesbezügliche Erweiterungen von Programmiersprachen wie beispielsweise C++ sind denkbar.

Gemäß den gestellten Anforderungen sollen die Klassen für die Plattform, die Agenten und verschiedene von ihnen referenzierte Objekte (u.a. Datenstrukturen und Nachrichten) versionierbar sein. Unter Plattform ist beispielsweise ein beliebiges Rechnersystem zu verstehen, das als Knoten im Netzwerk agieren kann und ein Programminterface (Betriebssoftware) für den (Software-)Agenten schafft.

Werden an nichtfehlerhaften Klassen Änderungen z.B. hinsichtlich der Effizienz durchgeführt, so sollen die alten Versionen der Objekte ihre Arbeit wie vorgesehen beenden können. Damit besteht die Möglichkeit der gleichzeitigen Existenz von Objekten verschiedener Versionen nebeneinander, die wiederum Objekte verschiedener Versionen referenzieren. Es ist also notwendig, zumindest bis zum "Aussterben" aller Objekte einer Version, sowie der sie referenzierenden Objekte, die alten Klassendefinitionen parallel zu neuen Klassendefinitionen bereitzustellen. Bei fehlerhaften Versionen dagegen kann die Möglichkeit geschaffen werden, nach dem Einspielen der neuen Klasse alle Objekte der alten Version schnellstmöglich zu vernichten.

Zur Auswahl der jeweils "passenden" Version der benötigten Klasse ist ein eigener Klassenlademechanismus (Classloader) notwendig.

Das erfindungsgemäße Verfahren zum versionsbehafteten dynamischen Update von Klassen eines mobilen Agentensystems umfaßt das Update der Plattform, das Update versionsbehafteter Klassen und die Instantiierung eines Objekts einer versionsbehafteten Klasse.

Weiterbildungen des erfindungsgemäßen Verfahrens ergeben sich aus den abhängigen Ansprüchen.

Es zeigen
- Fig.1: ein Blockdiagramm, das das Update einer Plattform darstellt,
- Fig.2: ein Blockdiagramm, das das Update versionierbarer Klassen darstellt,
- Fig.3: ein Blockdiagramm, das die Instantiierung eines Objekts einer versionierbaren Klasse darstellt.

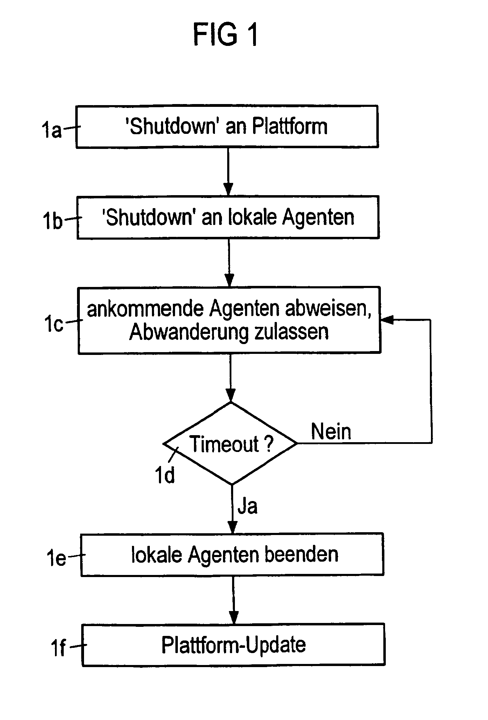

In Fig.1 wird die Möglichkeit dargestellt, sequentiell das Update aller Plattformen im System zu veranlassen. Dabei ist es wichtig, daß den Agenten ausreichend Zeit bleibt, eine Ausweichmöglichkeit in Form einer benachbarten Plattform zu finden. Damit auch bei neuen Plattformversionen alle von anderen Objekten genutzte Methoden der jeweiligen Plattform vorhanden sind, ist es vorteilhaft, die Programmierschnittstelle der Plattform, d.h. die Signaturen der von anderen Objekten nutzbaren Methoden, exakt festzulegen. Bei einer Implementierung in Java geschieht dies durch die Definition eines 'Interface', das jede Version der Plattform implementiert.

Die zu ersetzende Plattform bekommt ein Signal zum Shutdown (Schritt 1a). Ein festgelegtes Zeitintervall, dessen Länge beispielsweise mit dem Shutdown-Signal übermittelt wird, legt die Wartezeit bis zum tatsächlichen Herunterfahren der Plattform fest. Es ist vorteilhaft, den lokal auf dieser herunterzufahrenden Plattform existierenden Agenten den bevorstehenden Shutdown mitzuteilen (Schritt 1b). Alle auf dieser Plattform neu ankommenden Agenten werden abgewiesen, wohingegen ein Abwandern von Agenten (Schritt 1c) zugelassen ist. Nach Ablauf des Zeitintervalls bis zum Herunterfahren der Plattform (Schritt 1d) werden die lokal auf der Plattform noch existierenden Agenten beendet (Schritt 1e). Besonders wichtige Agenten können dabei zumindest teilweise gesichert werden, so daß sie nach dem Update der Plattform erneut gestartet werden können. Weiterhin werden die Daten gesichert, die den Shutdown der Plattform überleben sollen, beispielsweise Daten des Blackboards oder Zähler für die Benennung von Nachrichten. Schließlich wird das Update der Plattform durchgeführt (Schritt 1f).

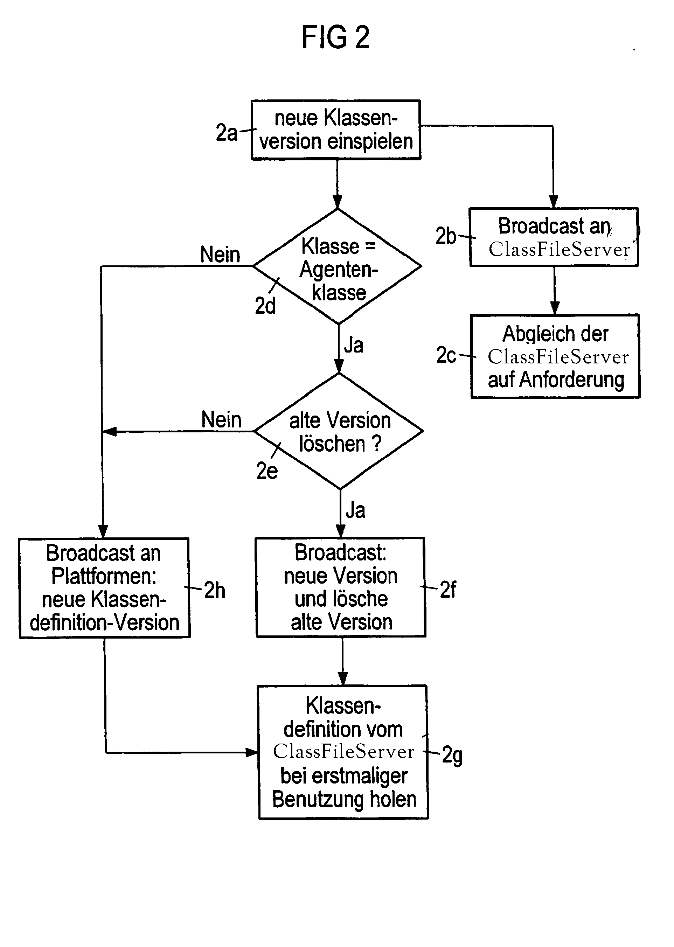

In Fig.2 ist ein Blockdiagramm zum Update versionierbarer Klassen dargestellt. Nach dem Einspielen einer neuen Version einer Klassendefinition (Schritt 2a) werden alle ClassFileServer über die Existenz diese neuen Klassenversion informiert (Schritt 2b). Wird später ein Agent dieser Klasse neu erzeugt und seine Klassendefinition beim ClassFileServer ohne Angabe einer vorausgesetzten Version angefordert, so wird stets die aktuellste Version geliefert und instantiiert. Damit ist die Aktualität des Gesamtsystems gewährleistet. Soll die alte Version des Agenten zerstört werden (Schritt 2e), weil sie beispielsweise fehlerhaft ist, so muß an alle Agenten dieser Version ein Rundruf gesendet werden, sich selbst zu beenden (Schritt 2f). Dabei ist zu prüfen, ob trotz eventuell neuer Datenstrukturen die Daten der alten Agenten gesichert werden sollen, um von denen einer neuen Version genutzt werden zu können. Im Falle einfacher Funktionsänderung oder Funktionserweiterung eines Agenten sterben die alten Agenten "natürlich" aus, da fehlerfreie Programme ihre Arbeit wie vorgesehen beenden können.

Wie oben erwähnt, gibt es Klassen, die keine abstrakte Beschreibung von Agenten oder Plattformen darstellen. Diese Klassen stehen beispielsweise für Datenstrukturen. Es ist möglich, daß mit Funktionsänderung eines Agenten auch die Änderung der von ihm genutzten Datenstruktur bedingt ist. Ebenso wie bei den Agentenklassen werden auch bei Einspielen einer neuen Klasse anderen Typs die Class-Server per Broadcast informiert (Schritt 2b). Wird später ein Objekt dieser Klasse ohne Vorgabe einer bestimmten Version instantiiert, so wird stets die aktuellste Version genutzt. Damit wird gewährleistet, daß Objekten (z.B. Agenten), die nicht auf eine bestimmte Version der von ihnen referenzierten Objekte angewiesen sind, stets die aktuellste Version einer Klassendefinition zur Verfügung steht. Die Agenten selbst (eventuell auch alle anderen Objekte, die versionierte Objekte referenzieren) führen eine Versionstabelle mit sich, in der zu jedem bereits referenzierten (versionierbaren) Objekt die Version einer Klasse verzeichnet ist. Der Class-Loader des Agenten fordert anhand dieser Versionstabelle die Klassendefinition der angegebenen Version an.

Soll, wie in Fig.2 dargestellt, eine neue Klassenversion eingespielt werden, so werden in Schritt 2b die ClassFileServer von der Existenz dieser neuen Klassenversion per Broadcast unterrichtet. Die einzelnen ClassFileServer fordern von der Administrationsplattform die neue Klassenversion an, wenn sie diese Information benötigen (on demand, Schritt 2c).

Ist die neue Klassenversion keine Agentenklasse, so werden die Plattformen über die neue Klassenversion per Broadcast unterrichtet (Schritte 2d, 2h) und die ClassFileServer holen sich die neue Klassendefinition beim erstmaligen Erzeugen eines Objekts einer Klasse (Schritt 2g).

Ist die neue Klassenversion eine Agentenklasse und soll die alte Klassenversion weiterhin zur Verfügung gestellt werden (Schritte 2d, 2e), so werden alle Plattformen über die neue Klassenversion per Broadcast unterrichtet (Schritt 2h), und die jeweilige Plattform holt sich bei erstmaliger Instantiierung des der neuen Klassendefinition entsprechenden Objektes diese neue Klassendefinition vom ClassFileServer (Schritt 2g).

Handelt es sich bei der neuen Klassenversion um eine Agentenklasse und soll die alte Version des Agenten sterben (Schritte 2d, 2e), so werden alle Plattformen über die neue Klassenversion des Agenten per Broadcast unterrichtet und das Sterben der alten Agenten eingeleitet (Schritt 2f), wobei die Agentendaten ggf. gesichert werden. Erzeugt die jeweilige Plattform das erste mal einen Agenten mit der neuen Klassenversion, so holt sich die Plattform die Klassendefinition vom ClassFileServer (Schritt 2g).

Zur Verwaltung, d.h. zum Einspielen neuer und zum Löschen alter Klassendefinitionen, existieren einige wenige ClassFileServer im Netz, denen die Klassendefinition als Datei innerhalb einer bestimmten Verzeichnisstruktur vorliegt. Soll eine neue Version einer Klasse ins System eingebracht werden, so wird die entsprechende Datei vom Administrator im Einspielverzeichnis eines der ClassFileServer abgelegt. Dabei ist es vorteilhaft, dem auf diesem Rechner laufenden Einspieltool (verwendbar im Rahmen eines Administrations- und Monitoring-Programms) nur den Namen der abgelegten Klassendatei anzugeben. Dieses Tool erzeugt aus der angegebenen Klassendatei die entsprechende Klasseninstanz, von welcher ein Objekt der Klasse instantiiert wird. Wird, wie im Beispiel, von einer Implementierung in Java ausgegangen, so kann die in dem jeweiligen Objekt verankerte Versionsnummer durch den Aufruf der Methode getVersion(), die die von der Versionsverwaltung der Programmierumgebung in den Quelltext integrierte Version liefert, ermittelt werden. Den realen Namen der Klasse erfährt das Tool über die von Java für jede Klasse bereitgestellte Methode getName() der Klasseninstanz. Nach Überprüfung der bereits vorhandenen Versionen (keine alte oder bereits vorhandene Version einspielen!) wird die Datei in das entsprechende Verzeichnis kopiert, wobei der neue Dateiname sowohl den Klassennamen als auch die Versionsnummer enthält. Dadurch werden die (durch die von der bei der Softwareentwicklung eingesetzte Versionsverwaltung einmalig vergebenen) Versionsnummern automatisch übernommen und somit Nutzfehler reduziert. Ein weiterer Vorteil der in der Klasse selbst verankerten Version ist die Möglichkeit, auch später ohne Wissen des Dateinamens oder der im System verwendeten Versionstabellen die Version eines Objektes versionierbarer Klasse ermitteln zu können. Weiterhin kommt dem Tool die Aufgabe zu, die Class-Server von der Existenz neuer Klassendefinitionen per Broadcast zu unterrichten.

Eine Weiterbildung des erfindungsgemäßen Verfahrens besteht darin, nur auf jeweils einem der ClassFileServer die neuen Klassendefinitionen einzuspielen. Die Information über neue Klassendefinitionen ist aber allen im Netz vorhandenen ClassFileServer gleichermaßen zugänglich zu machen, was einen Abgleich erforderlich macht. Nach dem Einspielen einer neuen Version einer Klasse wird allen ClassFileServer im Netz eine Information über die neue Version der Klasse und den diese Klasse zur Verfügung stehenden ClassFileServer gesendet. Die Anforderung dieser Klassendefinition bleibt dem einzelnen ClassFileServer selbst überlassen. Durch diesen Anforderungsmechanismus wird gewährleistet, daß, sobald ein ClassFileServer von einer neuen Klassendefinition erfährt, diese durch ihn angefordert werden kann.

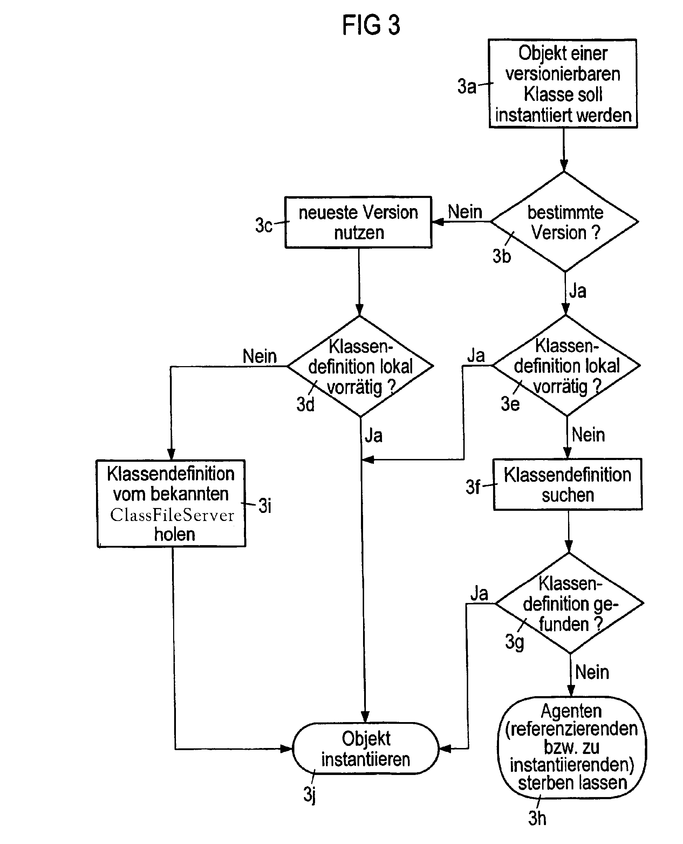

In Fig.3 wird ein Blockdiagramm zur Instantiierung einer Objekts einer versionierbaren Klasse dargestellt. In Schritt 3a wird davon ausgegangen, daß ein Objekt einer versionierbaren Klasse instantiiert werden soll. Wird keine bestimmte Version der Klassendefinition gefordert (Schritt 3b), so wird standardmäßig die neueste Version der Klassendefinition zur Instantiierung des Objekts verwendet (Schritt 3c). Ist diese neueste Klassendefinition bereits lokal auf der Plattform verfügbar (Schritt 3d), so wird das Objekt instantiiert (Schritt 3j), sonst muß die aktuelle Klassendefinition vom bekannten ClassFileServer geholt werden (Schritt 3i) und danach wird das Objekt instantiiert (Schritt 3j).

Ist hingegen eine bestimmte Version der Klassendefinition zur Instantiierung eines Objekts gefordert (Schritt 3b), so wird, falls die geforderte Klassendefinition lokal auf der Plattform verfügbar ist (Schritt 3e), das Objekt instantiiert (Schritt 3j), ansonsten nach der geforderten Klassendefinition beispielsweise nacheinander auf einer Vorgängerplattform, einer Ursprungsplattform des Agenten und schließlich auf den ClassFileServer gesucht (Schritt 3f). Wird die geforderte Klassendefinition nicht gefunden (Schritt 3g), so kann das Objekt nicht instantiiert werden (Schritt 3h), ansonsten wird das Objekt entsprechend der zu benutzenden Version der Klassendefinition instantiiert (Schritt 3j).

Aufgrund der Broadcasts an die ClassFileServer sind diesen jeweils die aktuellen Versionen der Klassendefinitionen bekannt. Die Nachricht, die den Agenten überträgt, wird die Version des Agenten vorangestellt. Diese Version ist auf dem Ziel des Agententransports entweder lokal vorhanden oder muß gesucht werden. Die Suche nach der Klassendefinition durchläuft drei Stufen:
1. Die Plattform des Agentenabsender, da der Agent dort möglicherweise ein Objekt dieser Klassendefinition referenzierte und die Klassendefinition daher schon im Speicher der Absender-Plattform gehalten wird,
2. die Plattform des Agentengeburtsortes, da dort möglicherweise ein Objekt dieser Klassendefinition instantiiert wurde und schließlich
3. den für die lokale Plattform zuständigen ClassFileServer

Alternativ dazu können auch andere Suchstrategien verwendet werden, z.B. kann bei Vorhandensein eines lokalen ClassFileServer zuerst auf diesen nach der geforderten Klassendefinition gesucht werden, um Anfragen über das Netz zu vermeiden.

Im Ausführungsbeispiel wird für jeden Agenten ein eigener Class-Loader instantiiert, der eine Versionstabelle der bereits referenzierten Klassen besitzt. Auch der Agent selbst führt eine Tabelle geforderter Klassenversionen mit sich. Die Versionstabelle des Classloaders wird beim Eintreffen des Agenten mit den Einträgen der Versionstabelle des Agenten gefüllt. Wird nun ein vom Agenten referenziertes Objekt instantiiert, so wird in der Versionstabelle des Agenten überprüft, ob bereits ein Objekt dieser Klasse referenziert wurde und wenn ja, von welcher Version dieses Objekt ist. Wurde vorher noch kein Objekt dieser Klasse referenziert, d.h. ist diese Klasse nicht in der Versionstabelle des Agenten verzeichnet, so wird die neueste Version verwendet, die der Plattform durch Broadcast bekanntgegeben wurde. Ist diese Version noch nicht im Speicher der Plattform vorhanden, so wird sie gemäß obiger Suchstrategie gesucht und geladen. In der Versionstabelle des Agenten wird dann die Klasse und die verwendete Version der Klassendefinition eingetragen.

Durch den im erfindungsgemäßen Verfahren enthaltenen Mechanismus der Versionsverwaltung von Klassendefinitionen wird gewährleistet, daß Agenten Objekte alter Klassendefinitionen verwenden können, bzw. daß auch Agenten veralteter Versionen auf einer Plattform verarbeitet werden können. Da fehlerfreie veraltete Versionen von Agenten bzw. Objekten allgemein wie vorgesehen ihre Aufgabe beenden sollen, müssen die alten Klassendefinitionen eine gewisse Zeit "aufgehoben" werden. Alle bereits einmal benötigten Klassendefinitionen werden vom der Plattform im Speicher gehalten. Es ist daher vorteilhaft, wenn ein Mechanismus existiert, der entscheidet, wann veraltete Klassendefinitionen verworfen werden. So könnte beispielsweise ein Administrator manuell die verschiedenen Versionen mittels des Monitoring- und Administrationstools freigeben. Ein weiterer beispielhafter Mechanismus zur Entscheidung über veraltete Klassendefinitionen besteht darin, die einzelnen Zugriffe auf Objekte versionierter Klassen mit einem Referenzzähler zu überwachen. Existiert eine neue Version der Klasse und ist der Zähler der alten Version gleich 0, so könnte die entsprechende alte Klassendefinition verworfen werden. Eine dritte Möglichkeit besteht darin, bereits bei der Einspielung einer Klasse eine Restlebenszeit für diese Klasse anzugeben, die nach dem Auftreten einer neuen Version dieser Klasse ihre Wirkung entfaltet.

## Patentansprüche

1. Verfahren zum Instantiieren einer in einer objektorientierten Programmiersprache definierten versionsbehafteten Klasse,
- bei dem Rechner in einem Netzverbund verteilt angeordnet werden und von jedem dieser Rechner eine Plattform für den Betrieb von mobilen Softwareagenten (Agenten) zur Verfügung gestellt wird,
- in folgenden Schritten:
1a) Wenn eine bestimmte Version einer instantiierbaren Klasse gefordert wird, wird die geforderte Version benutzt und zu 1c) gesprungen,
1b) sonst wird die neueste Version der instantiierbaren Klasse verwendet, die Plattform untersucht, ob diese Version bereits lokal vorrätig ist und gegebenenfalls zu 1d) gesprungen, sonst wird die Klassendefinition der entsprechenden Version von einem ClassFileServer geholt und zu 1d) gesprungen,
1c) ist die Klassendefinition der entsprechenden Version bereits lokal vorrätig, so wird zu 1d) gesprungen, sonst wird nach der Klassendefinition gesucht und wenn die Klassendefinition gefunden wird zu 1d) gesprungen, sonst wird die Klasse nicht instantiiert,
1d) die Klasse wird gemäß einer zu benutzender Version der Klassendefinition instantiiert.

2. Verfahren insbesondere nach Anspruch 1,
zum Update versionsbehafteter Klassen, unterteilt in folgende Schritte:
2a) Auf einer Administrationsplattform wird eine neue Version einer Klasse eingespielt,
2b) die Information über die neue Version einer Klasse wird an ClassFileServer übermittelt (broadcast),
2c) jeder einzelne ClassFileServer von der Administrationsplattform die neue Klassenversion an, wenn er diese Information benötigt,
2d) wenn die neue Klasse eine Agentenklasse ist, wird zu 2f) gesprungen,
2e) wenn die neue Klasse keine Agentenklassen ist, wird die Information über die neue Version der Klasse an alle Plattformen übermittelt (broadcast) und zu 2h) gesprungen,
2f) wenn keine Agenten mit der alten Version der Agentenklasse mehr existieren sollen, dann wird zu 2g) gesprungen, sonst wird die Information über die neue Version der Klasse an alle Plattformen übermittelt (broadcast) und zu 2h) gesprungen,
2g) alle Plattformen werden davon unterrichtet, daß eine neue Version der Agentenklasse vorliegt, und die Agenten der alten Version werden zerstört,
2h) die Klassendefinition der neuen Version der Agentenklasse wird bei erstmaliger Instantiierung vom ClassFileServer geholt.

3. Verfahren insbesondere nach Anspruch 1 oder 2, zum Update einer Plattform unterteilt in folgende Schritte:
3a) Wenn eine Plattform upgedatet werden soll, werden ankommende Agenten zurückgewiesen, nur bereits auf der Plattform vorhandene Agenten dürfen abwandern,
3b) nach einer vorgebbaren Zeitdauer (Timeout) werden die noch lokal existierenden Agenten beendet und das Update für die Plattform durchgeführt.

4. Verfahren nach Anspruch 1,
bei dem im Schritt 1c) die Suche nach der Klassendefinition nacheinander auf einer vorgängerplattform, einer Ursprungsplattform des Agenten und schließlich auf dem ClassFileServer durchgeführt wird.

5. Verfahren nach Anspruch 2,
bei dem zusätzlich vor dem Zerstören der Agenten in Schritt 2g) vorgebbare Agentendaten gesichert werden.

6. Verfahren nach Anspruch 3,
bei dem zusätzlich zum Update der Plattform in Schritt 3b) vorher noch vorgebbare Agenten und Daten gesichert und nach dem Update wiederhergestellt werden.

7. Verfahren nach Anspruch 1,2 oder 3,
bei dem eine Implementierung in einer Programmiersprache durchgeführt wird, die dynamisches Laden von Klassen ermöglicht.

## Claims

1. Method for instantiating a class having different versions defined in an object-oriented programming language,
- wherein computers are arranged in distributed fashion in a network connection and a platform for the operation of mobile software agents (agents) is provided by each of said computers,
- in the following steps:
1a) if a particular version of an instantiatable class is requested, using the requested version and jumping to step 1c);
1b) otherwise, using a newest version of the instantiatable class, investigating with the platform whether this version is already locally available and jumping to step 1d as required, otherwise retrieving the class definition of the corresponding version from a class file server and jumping to step 1d);
1c) if the class definition of the corresponding version is already locally available, jumping to step 1d), otherwise searching for the class definition and, if the class definition is found, jumping to step 1d), otherwise, not instantiating the class,
1d) instantiating the class according to a version of the class definition to be used.

2. Method in particular according to claim 1 for updating classes having different versions, divided into the following steps:
2a) importing a new version of a class to an administration platform,
2b) transmitting the information concerning the new version of a class to class file servers (broadcast),
2c) each individual class file server requesting the new class version from the administration platform, if it requires this information,
2d) if the new class is an agent class, jumping to step 2f),
2e) if the new class is not an agent class, transmitting the information concerning the new version of the class to all platforms (broadcast) and jumping to step 2h),
2f) if no agents are to exist any longer with the old version of the agent class, jumping to step 2g), otherwise transmitting the information concerning the new version of the class to all platforms (broadcast) and jumping to step 2h),
2g) notifying all platforms that a new version of the agent class is present and destroying the agents of the old version,
2h) retrieving the class definition of the new version of the agent class from the class file server when instantiation takes place for a first time.

3. Method in particular according to claim 1 or 2 for updating a platform, divided into the following steps:
3a) if a platform is to be updated, rejecting incoming agents, and only allowing agents already present on the platform to migrate,
3b) after a predeterminable time span (timeout), terminating the agents still existing locally and carrying out the update for the platform.

4. Method according to claim 1, wherein in step 1c) carrying out the search for the class definition successively on a predecessor platform, an originating platform of the agent and finally on the class file server.

5. Method according to claim 2, wherein in addition saving predeterminable agent data in step 2g) before the destruction of the agents.

6. Method according to claim 3, wherein in addition to the updating of the platform in step 3b) previously storing important agents and data that can still be predetermined and restoring said agents and data after the update.

7. Method according to claim 1, 2 or 3, wherein an implementation is carried out in a programming language that enables dynamic loading of classes.

## Revendications

1. Procédé pour instancier une classe dotée de versions, laquelle est définie dans un langage de programmation orienté objet, dans lequel
- des ordinateurs sont disposés de manière répartie dans une interconnexion de réseaux et chacun de ces ordinateurs met à disposition une plate-forme pour l'exploitation d'agents logiciels mobiles (agents),
- dans les étapes suivantes:
1a) si une version déterminée d'une classe instanciable est demandée, la version demandée est utilisée et il y a passage à 1c),
1b) autrement, la version la plus récente de la classe instanciable est utilisée, la plate-forme est examinée pour établir si cette version est déjà en réserve localement et, le cas échéant, il y a passage à 1d), autrement, on va chercher la définition de classe de la version correspondante auprès d'un ClassFileServer et il y a passage à 1d),
1c) si la définition de classe de la version correspondante est déjà en réserve localement, il y a passage à 1d), autrement, la définition de classe est cherchée et, si la définition de classe est trouvée, il y a passage à 1d), autrement, il n'y a pas instanciation de la classe,
1d) il y a instanciation de la classe selon une version à utiliser de la définition de classe.

2. Procédé, en particulier selon la revendication 1, pour actualiser des classes dotées de versions, subdivisé en étapes comme suit:
2a) une nouvelle version d'une classe est introduite sur une plate-forme d'administration,
2b) l'information sur la nouvelle version d'une classe est transmise à des ClassFileServers (broadcast),
2c) chaque ClassFileServer individuel demande la nouvelle version de classe à la plate-forme d'administration s'il a besoin de cette information,
2d) si la nouvelle classe est une classe d'agents, il y a passage à 2f),
2e) si la nouvelle classe n'est pas une classe d'agents, l'information sur la nouvelle version de la classe est transmise à toutes les plates-formes (broadcast) et il y a passage à 2h),
2f) si aucun agent avec l'ancienne version de la classe d'agents ne doit plus exister, il y a passage à 2g), autrement, l'information sur la nouvelle version de la classe est transmise à toutes les plates-formes (broadcast) et il y a passage à 2h),
2g) toutes les plates-formes sont informées de la présence d'une nouvelle version de la classe d'agents et les agents de l'ancienne version sont détruits,
2h) à la première instanciation, on va chercher la définition de classe de la nouvelle version de la classe d'agents auprès du ClassFileServer.

3. Procédé, en particulier selon la revendication 1 ou 2, pour actualiser une plate-forme, subdivisé en étapes comme suit:
3a) s'il s'agit d'actualiser une plate-forme, des agents arrivants sont refusés, seuls des agents déjà présents sur la plate-forme peuvent partir,
3b) après une durée de temps prédéterminable (timeout), les agents qui existent encore localement sont terminés et l'actualisation est effectuée pour la plate-forme.

4. Procédé selon la revendication 1, dans lequel, à l'étape 1c), la recherche de la définition de classe est effectuée successivement sur une plate-forme précédente, une plate-forme d'origine de l'agent et finalement sur le ClassFileServer.

5. Procédé selon la revendication 2, dans lequel des données d'agents prédéterminables sont sécurisées additionnellement avant la destruction des agents à l'étape 2g).

6. Procédé selon la revendication 3, dans lequel, en plus de l'actualisation de la plate-forme à l'étape 3b), des agents et données encore prédéterminables préalablement sont sécurisés et reconstitués après l'actualisation.

7. Procédé selon la revendication 1, 2 ou 3, dans lequel une implémentation est effectuée dans un langage de programmation, lequel permet le chargement dynamique de classes.
